# EUROPEAN PATENT SPECIFICATION

(11) **EP 4 439 833 B1**
(45) Date of publication and mention of the grant of the patent: **24.06.2026**
(21) Application number: 23769805.5
(22) Date of filing: 14.03.2023
(51) Int. Cl.: H01M 50/242, H01M 50/244, H01M 50/233, H01M 50/249

(54) **TRAY ASSEMBLY, POWER BATTERY PACK, AND VEHICLE**
SCHALENANORDNUNG, BATTERIEPACK UND FAHRZEUG
ENSEMBLE PLATEAU, BLOC-BATTERIE D'ALIMENTATION ET VÉHICULE

(30) Priority: 14.03.2022 CN 202220566246 U
(43) Date of publication of application: 02.10.2024
(73) Proprietor: BYD Company Limited, Shenzhen, Guangdong 518118 (CN)
(72) Inventor: WANG, Qi, Shenzhen, Guangdong 518118 (CN); TANG, Jianglong, Shenzhen, Guangdong 518118 (CN); LU, Zhipei, Shenzhen, Guangdong 518118 (CN); TIAN, Jing, Shenzhen, Guangdong 518118 (CN); YANG, Fuxing, Shenzhen, Guangdong 518118 (CN)
(74) Representative: Dehns Germany Partnerschaft mbB
(86) International application number: PCT/CN2023/081434
(87) International publication number: WO 2023/174303

(56) References cited:
- WO-A1-2020/130346
- WO-A1-2021/190447
- CN-U- 202 268 406
- CN-U- 213 042 998
- CN-U- 213 501 812
- CN-U- 214 505 663
- CN-U- 214 505 663
- CN-U- 217 158 428
- CN-Y- 201 329 795
- CN-Y- 201 329 796
- US-A1- 2018 337 377

## Description

### CROSS-REFERENCE TO RELATED APPLICATIONS

The present invention claims priority to and benefits of Chinese Patent Application No. 202220566246.5, filed on March 14, 2022.

### FIELD

The present invention relates to the field of vehicle technologies, and in particular, to a tray assembly, a power battery pack, and a vehicle.

### BACKGROUND

In the related art, sealing performance of a power battery pack is poor and hardly meets a design requirement. Especially when an expansion beam and a tray are separately processed members, a sealing arrangement of the power battery pack is complex.

WO2020/130346A1 describes a tray assembly according to the preamble of claim 1.

### SUMMARY

The present invention according to the independent claims aims to resolve at least one of the technical problems existing in the related art. Therefore, the present invention provides a tray assembly. The tray assembly has good sealing performance, to meet a sealing requirement of a power battery pack.

The present invention further provides a power battery pack including the foregoing tray assembly.

The present invention further provides a vehicle including the foregoing power battery pack.

According to embodiments of a first aspect of the present invention, the tray assembly includes: a bottom plate, where the bottom plate includes a main body portion and a raised edge portion (or flanged portion), the main body portion defines an accommodating cavity, the accommodating cavity is configured to accommodate a battery, and the raised edge portion is located on a peripheral side of the main body portion and arranged around the main body portion; an expansion beam, where the expansion beam is arranged on one side of the raised edge portion in a thickness direction, and the expansion beam is adapted to abut with the battery; and a first sealing member, where the first sealing member includes a first portion, and the first portion is arranged between the expansion beam and the raised edge portion.

According to the embodiments of the present invention, the tray assembly provides the first sealing member between the expansion beam and the raised edge portion, to seal a gap between the raised edge portion and the expansion beam, so that the sealing performance of the tray assembly is improved. In this way, it is easy to meet a sealing requirement of the power battery pack.

In some embodiments, the tray assembly further includes: a side frame, where the side frame is located on a peripheral side of the bottom plate and arranged around the main body portion, the side frame includes multiple side beams connected end to end in sequence, the side beam is located on the other side of the raised edge portion in the thickness direction and fixed to the raised edge portion, and the raised edge portion forms (or has) a first avoiding hole; and a fastener, where the fastener penetrates the first avoiding hole and fixedly connects the expansion beam to a corresponding side beam, and the first portion is arranged around the first avoiding hole.

In some embodiments, the first sealing member further includes a second portion, and the second portion is sealed between the fastener and a peripheral wall of the first avoiding hole.

In some embodiments, the side frame further includes a bushing. The bushing penetrates the first avoiding hole and is fixed to the side beam. The bushing forms (or has) a connecting hole. The fastener is fixedly fitted with the connecting hole. The first sealing member further includes a third portion, and the third portion is sealed between the bushing and a peripheral wall of the first avoiding hole.

In some embodiments, the tray assembly further includes: a second sealing member, where the second sealing member includes a fourth portion, and the fourth portion is arranged between the side beam and the raised edge portion.

In some embodiments, the fourth portion is arranged around the fastener.

In some embodiments, the side frame further includes the bushing. The side beam forms (or has) a second avoiding hole. The bushing is fixed to the side beam and at least a portion of the bushing is located on one side of the second avoiding hole facing away from the raised edge portion. The bushing forms (or has) a connecting hole. The fastener penetrates the second avoiding hole and is fixedly fitted with the connecting hole.

In some embodiments, one end of the bushing protrudes from one side of the raised edge portion facing the expansion beam and abuts against the expansion beam.

In some embodiments, the bushing and a peripheral wall of the second avoiding hole are welded and fixed, and the second sealing member covers a welding seam at the second avoiding hole.

In some embodiments, the first sealing member includes the third portion, and the third portion is sealed between the bushing and the peripheral wall of the first avoiding hole; and/or the second sealing member includes a fifth portion, and the fifth portion is sealed between the bushing and the peripheral wall of the first avoiding hole.

In some embodiments, a region of the bushing that abuts against the expansion beam is an annular region, and a radial distance between an outer circumferential edge and an inner circumferential edge of the annular region is greater than or equal to 1 mm.

In some embodiments, either of the first sealing member and the second sealing member is a structural adhesive, and a thickness of the structural adhesive is t, where 0.5 mm ≤ t ≤ 1 mm.

In some embodiments, the bottom plate is an insulating material member.

In some embodiments, the expansion beam includes a carrying beam and a partition plate. The carrying beam defines a carrying cavity. The partition plate is arranged in the carrying cavity to separate the carrying cavity into a first carrying cavity and a second carrying cavity. The first carrying cavity is located on one side of the second carrying cavity facing away from the raised edge portion.

In some embodiments, the tray assembly further includes the fastener. The expansion beam further includes: a support member, where the support member is arranged in the second carrying cavity, the support member supports one cavity wall of the second carrying cavity away from the partition plate and the partition plate, and the fastener penetrates the partition plate and the second carrying cavity and extends out of the second carrying cavity to fix the expansion beam to the side beam.

In some embodiments, the support member includes multiple support blocks. The multiple support blocks are arranged spaced away along a length direction of the carrying beam. Each fastener penetrates a corresponding support block.

In some embodiments, an area of a cross section of the support member is s1, and an area of a cross section of the second carrying cavity is s2, where 50% ≤ s1/s2 ≤ 60%. Either of the cross section of the support member and the cross section of the second carrying cavity is perpendicular to the length direction of the carrying beam.

In some embodiments, one cavity wall of the second carrying cavity away from the first carrying cavity forms (or has) a mounting through hole. The support member is arranged in the second carrying cavity. One end of the support member abuts against the partition plate, and the other end of the support member is fitted with the mounting through hole and fixedly connected to the cavity wall of the second carrying cavity away from the partition plate.

In some embodiments, the side frame includes the bushing. The bushing is fixedly connected to the expansion beam and the fastener separately, and one end of the bushing adjacent to the expansion beam abuts against the support member.

According to embodiments of a second aspect of the present invention, a power battery pack includes a battery, a sealing cover, and the tray assembly according to the embodiments of the first aspect of the present invention. The sealing cover covers an open side of the accommodating cavity and together with the tray assembly defines a mounting space. The battery is provided in the mounting space.

According to the embodiments of the present invention, the power battery pack uses the foregoing tray assembly, to meet a sealing requirement of the power battery pack.

In some embodiments, multiple batteries exist, and the multiple batteries are arranged in a first direction in sequence. Each of the batteries extends along a second direction. A quantity of expansion beams is two, and the two expansion beams are respectively arranged on two sides of the multiple batteries in the first direction. Either of the expansion beams extends along the second direction. The second direction is perpendicular to the first direction.

According to embodiments of a third aspect of the present invention, a vehicle includes the power battery pack according to the embodiments of the second aspect of the present invention.

According to the embodiments of the present invention, the vehicle uses the foregoing power battery pack, to ensure safe use of the vehicle.

Additional aspects and advantages of the present invention will be given in the following description, some of which will become apparent from the following description or may be learned from practices of the present invention.

### BRIEF DESCRIPTION OF THE DRAWINGS

The foregoing and/or additional aspects and advantages of the present invention will become apparent and comprehensible in the description of the embodiments made with reference to the following accompanying drawings.
FIG. 1 is a schematic diagram of a tray assembly according to an embodiment of the present invention;
FIG. 2 is an enlarged view of a part B circled in FIG. 1;
FIG. 3 is another schematic diagram of the tray assembly shown in FIG. 1;
FIG. 4 is an exploded view of a tray assembly according to an embodiment of the present invention;
FIG. 5 is a schematic diagram of a power battery pack according to an embodiment of the present invention;
FIG. 6 is another schematic diagram of the power battery pack shown in FIG. 5;
FIG. 7 is a cross-sectional view taken along line C-C in FIG. 6;
FIG. 8 is a schematic diagram of connection of an expansion beam shown in FIG. 7;
FIG. 9 is a schematic diagram of the expansion beam shown in FIG. 8;
FIG. 10 is still another schematic diagram of the power battery pack shown in FIG. 5; and
FIG. 11 is a schematic diagram of a vehicle according to an embodiment of the present invention.

### DETAILED DESCRIPTION

Embodiments of the present invention are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present invention, and cannot be construed as a limitation to the present invention.

The disclosure below provides many different embodiments or examples for implementing different structures of the present invention. To simplify the disclosure of the present invention, the following describes components and settings of specific examples. Certainly, the components and settings are merely examples, and are not intended to limit the present invention. In addition, reference numerals and/or letters may be repeated in different examples in the present invention. Such repetitions are for simplification and clarity, which do not indicate relationships between the embodiments and/or settings discussed. In addition, the present disclosure provides examples of various specific processes and materials, but a person of ordinary skill in the art may be aware of the applicability of other processes and/or the use of other materials.

The following describes a tray assembly 1 according to the embodiments of the present invention with reference to the accompanying drawings.

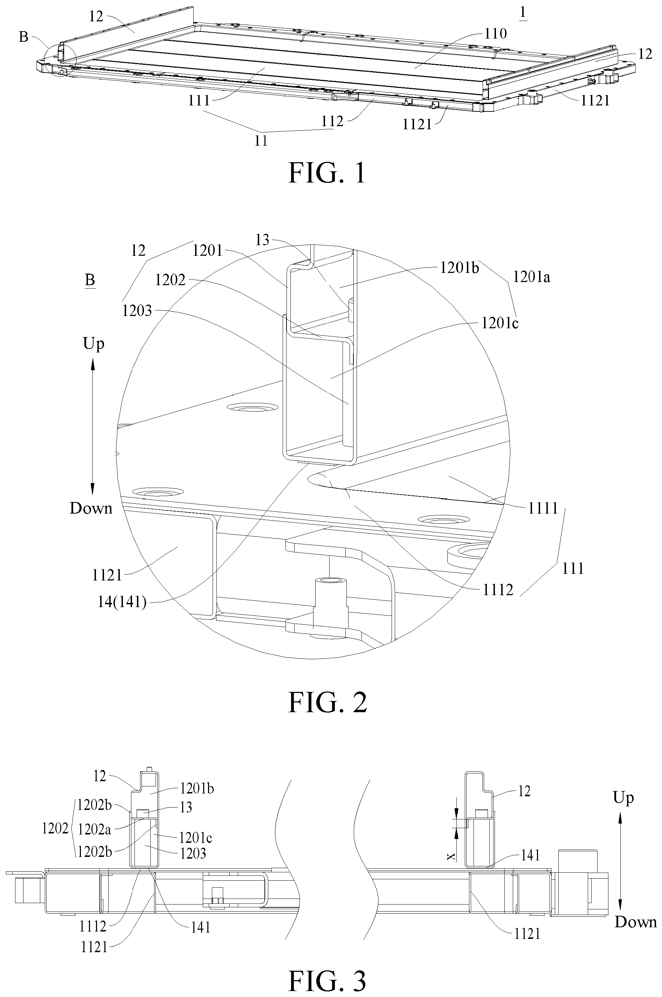

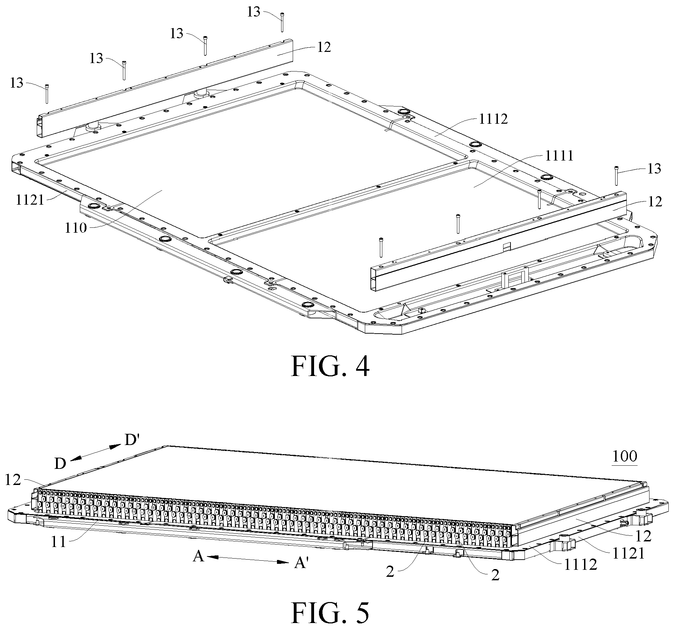

As shown in FIG. 1 and FIG. 4, the tray assembly 1 includes a bottom plate 111. The bottom plate 111 includes a main body portion 1111 and a raised edge portion 1112. The main body portion 1111 defines an accommodating cavity 110. The accommodating cavity 110 is configured to accommodate a battery 2. This facilitates ensuring stable mounting of the battery 2, and in addition, the bottom plate 111 can protect the battery 2. The raised edge portion 1112 is located on a peripheral side of the main body portion 1111, and the raised edge portion 1112 is arranged around the main body portion 1111. In this way, the raised edge portion 1112 can generally define an annular structure.

It should be noted that, in the description of the present invention, "annular" is to be understood in a broad sense, that is, not limited to "circular ring". For example, it may alternatively be "polygonal ring".

The tray assembly 1 further includes an expansion beam 12. The expansion beam (12) is arranged on one side of the raised edge portion (1112) in a thickness direction. The expansion beam (12) is adapted to abut with the battery (2). For example, the expansion beam 12 may be in direct contact with the battery 2, or another component may be arranged between the expansion beam 12 and the battery 2 to make the expansion beam 12 indirectly abut against the battery 2. This facilitates the expansion beam 12 to withstand expansion force of the battery 2.

It can be learned that, the expansion beam 12 and the bottom plate 111 are separately processed members.

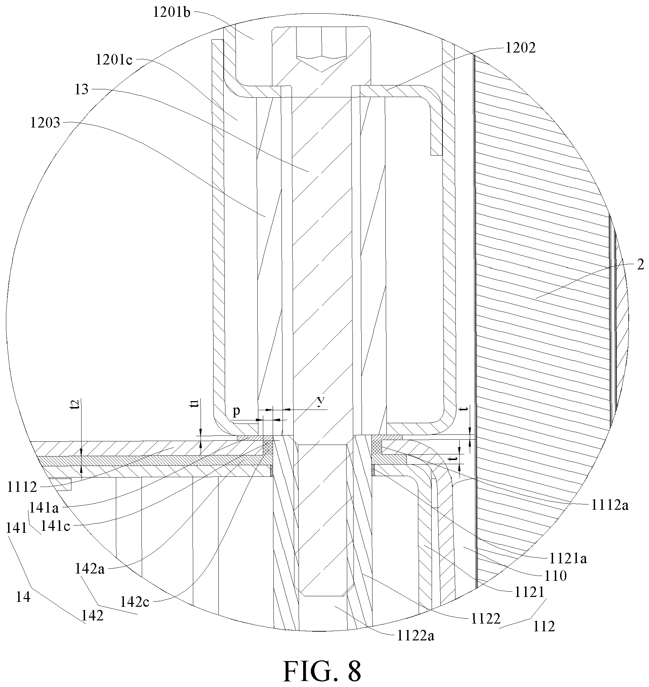

As shown in FIG. 2 and FIG. 8, the tray assembly 1 further includes a first sealing member 141. The first sealing member 141 includes a first portion 141a. The first portion 141a is arranged between the expansion beam 12 and the raised edge portion 1112. In this way, a portion of the first sealing member 141 is arranged between the expansion beam 12 and the raised edge portion 1112, or the entire first sealing member 141 is arranged between the expansion beam 12 and the raised edge portion 1112, to seal a gap between the expansion beam 12 and the raised edge portion 1112, so that the tray assembly 1 has good sealing performance. Therefore, when the tray assembly 1 is used in a power battery pack 100, it is easy to meet a sealing requirement of the power battery pack 100, to ensure that the power battery pack 100 has good performance such as dustproof and waterproof. In addition, the first sealing member 141 is arranged conveniently, and has a large operating space.

According to the embodiments of the present invention, the tray assembly 1 provides the first portion 141a of the first sealing member 141 between the expansion beam 12 and the raised edge portion 1112, to seal the gap between the raised edge portion 1112 and the expansion beam 12, so that the sealing performance of the tray assembly 1 is improved. In this way, it is easy to meet the sealing requirement of the power battery pack 100.

In some embodiments, as shown in FIG. 4, FIG. 7, and FIG. 8, the tray assembly 1 further includes a side frame 112. The side frame 112 is located on a peripheral side of the bottom plate 111, and the side frame 112 is arranged around the main body portion 1111. The side frame 112 includes multiple side beams 1121 connected end to end in sequence, so that the side frame 112 defines an annular structure to facilitate the side frame 112 to stably support the bottom plate 111. The side beam 1121 is located on the other side of the raised edge portion 1112 in the thickness direction, and the side beam 1121 is fixed to the raised edge portion 1112, so that the expansion beam 12 and the side beam 1121 are located on different sides of the thickness of the raised edge portion 1112.

Optionally, the side beam 1121 is a rolled steel member. Certainly, in other embodiments, the side beam 1121 may alternatively be an aluminum member.

As shown in FIG. 8, the raised edge portion 1112 forms a first avoiding hole 1112a. The tray assembly 1 further includes a fastener 13. The fastener 13 penetrates the first avoiding hole 1112a, and the fastener 13 fixedly connects the expansion beam 12 to the side beam 1121, so that the first avoiding hole 1112a can avoid the fastener 13, to ensure that the expansion beam 12 is smoothly fixed to a corresponding side beam 1121 through the fastener 13. The first portion 141a is arranged around the first avoiding hole 1112a, to be specific, a portion of the first sealing member 141 between the expansion beam 12 and the raised edge portion 1112 is arranged around the first avoiding hole 1112a.

In some embodiments, the first sealing member 141 further includes a second portion, and the second portion is sealed between the fastener 13 and a peripheral wall of the first avoiding hole 1112a. The first sealing member 141 ensures sealing between the expansion beam 12 and the raised edge portion 1112, and also ensures sealing between the fastener 13 and the raised edge portion 1112, further improving the sealing performance of the tray assembly 1.

Optionally, the first sealing member 141 is a structural adhesive. The structural adhesive has good strength, corrosion resistance, and stable performance, to ensure service life of the tray assembly 1. In addition, it is easy to implement bonding and fixing between the expansion beam 12 and the raised edge portion 1112, to improve connection strength between the expansion beam 12 and the raised edge portion 1112. A thickness of the first sealing member 141 is t1, where 0.5 mm ≤ t1 ≤ 1 mm. In this way, difficulty in controlling a processing process caused by an excessively small thickness of the first sealing member 141 can be avoided, and impact on a bonding effect of the structural adhesive caused by an excessively large thickness of the first sealing member 141 can also be avoided. For example, the thickness of the first sealing member 141 may be 0.5 mm, 0.7 mm, 0.8 mm, or 1 mm. Certainly, in other embodiments, the first sealing member 141 may alternatively be a sealing ring, for example, a rubber ring.

Optionally, when the first sealing member 141 is a structural adhesive, the structural adhesive is in a liquid state during a process of assembling the tray assembly 1. The structural adhesive is arranged between the expansion beam 12 and the raised edge portion 1112. Through extrusion between the expansion beam 12 and the raised edge portion 1112, the structural adhesive easily overflows between the fastener 13 and the first avoiding hole 1112a. Therefore, when the structural adhesive cures to form the first sealing member 141, it is easy to seal the first portion 141a of the first sealing member 141 between the expansion beam 12 and the raised edge portion 1112, and seal the second portion of the first sealing member 141 between the fastener 13 and the first avoiding hole 1112a.

In some embodiments, as shown in FIG. 8, the side frame 112 further includes a bushing 1122. The bushing 1122 penetrates the first avoiding hole 1112a, and the bushing 1122 is fixed to the side beam 1121. The bushing 1122 forms a connecting hole 1122a. The fastener 13 is fixedly fitted with the connecting hole 1122a. The first sealing member 141 further includes a third portion 141c. The third portion 141c is sealed between the bushing 1122 and a peripheral wall of the first avoiding hole 1112a, to implement sealing between the bushing 1122 and the raised edge portion 1112, further improving the sealing performance of the tray assembly 1. In this case, the bushing 1122 may penetrate the first avoiding hole 1112a.

In some embodiments, as shown in FIG. 8, the tray assembly 1 further includes a second sealing member 142. The second sealing member 142 includes a fourth portion 142a. The fourth portion 142a is arranged between the side beam 1121 and the raised edge portion 1112. In this way, a portion of the second sealing member 142 is arranged between the side beam 1121 and the raised edge portion 1112, or the entire second sealing member 142 is arranged between the side beam 1121 and the raised edge portion 1112, to seal a gap between the side beam 1121 and the raised edge portion 1112, further improving the sealing performance of the tray assembly 1. This helps ensure that the power battery pack 100 has good performance such as dustproof and waterproof.

In some embodiments, as shown in FIG. 2 to FIG. 4 and FIG. 8, the fourth portion 142a is arranged around the fastener 13. To be specific, a portion of the second sealing member 142 between the side beam 1121 and the raised edge portion 1112 is arranged around the fastener 13, so that one side of the fastener 13 adjacent to the accommodating cavity 110 and one side away from the accommodating cavity 110 either are respectively arranged with one portion of the second sealing member 142. In this way, the portion of the second sealing member 142 located on the side of the fastener 13 adjacent to the accommodating cavity 110 is sealed between the side beam 1121 and the expansion beam 12, and the portion of the second sealing member 142 located on the side of the fastener 13 away from the accommodating cavity 110 is also sealed between the side beam 1121 and the expansion beam 12, facilitating double sealing at the fastener 13, to improve the sealing performance of the tray assembly 1.

Optionally, the fastener 13 is a bolt.

Optionally, when the second sealing member 142 is a structural adhesive, the structural adhesive is in a liquid state during a process of assembling the tray assembly 1. The structural adhesive is extruded when the fastener 13 fixedly connects the expansion beam 12 to the side beam 1121. After the structural adhesive cures, it is easy to make the second sealing member 142 to be an integral member, to improve setting reliability of the second sealing member 142.

In some embodiments, as shown in FIG. 8, the side frame 112 further includes the bushing 1122. The side beam 1121 forms (or has) a second avoiding hole 1121a. The bushing 1122 is fixed to the side beam 1121, and at least a portion of the bushing 1122 is located on one side of the second avoiding hole 1121a facing away from the raised edge portion 1112. The bushing 1122 forms a connecting hole 1122a. The fastener 13 penetrates the second avoiding hole 1121a and penetrates the connecting hole 1122a, and the fastener 13 is fixedly fitted with the connecting hole 1122a, so that the fastener 13 is fixedly connected to the bushing 1122, and the expansion beam 12 is fixed to a corresponding side beam 1121.

In this way, by arranging the bushing 1122 on the side beam 1121 and allowing the fastener 13 to fixedly connect the expansion beam 12 to the bushing 1122, fixed connection between the expansion beam 12 and the side beam 1121 is implemented. Therefore, there is no need to separately process the connecting hole 1122a on the side beam 1121. This helps simplify a structure of the side beam 1121, and facilitates arrangement of the connecting hole 1122a. In addition, at least a portion of the bushing 1122 is located on one side of the second avoiding hole 1121a facing away from the raised edge portion 1112. This helps increase a length of the fastener 13 extending out of the expansion beam 12, to improve connection strength between the side beam 1121 and the expansion beam 12 to some extent.

In some embodiments, as shown in FIG. 8, one end of the bushing 1122 protrudes from one side of the raised edge portion 1112 facing the expansion beam 12, and the one end of the bushing 1122 abuts against the expansion beam 12. In this way, the one end of the bushing 1122 abuts against the expansion beam 12 through the first avoiding hole 1112a and the second avoiding hole 1121a, so that the bushing 1122 tightly abuts against the expansion beam 12 under an action of the fastener 13. This helps further improve the connection strength between the side beam 1121 and the expansion beam 12.

In some embodiments, as shown in FIG. 8, the bushing 1122 and a peripheral wall of the second avoiding hole 1121a are welded and fixed. The second sealing member 142 covers a welding seam at the second avoiding hole 1121a. In this way, the second sealing member 142 ensures sealing between the side beam 1121 and the raised edge portion 1112, and also ensures sealing between the bushing 1112 and the side beam 1121, further improving the sealing performance of the tray assembly 1.

Optionally, the second sealing member 142 is a structural adhesive. The structural adhesive has good strength, corrosion resistance, and stable performance, to ensure service life of the tray assembly 1. In addition, it is easy to implement bonding and fixing between the side beam 1121 and the raised edge portion 1112, to improve connection strength between the side beam 1121 and the raised edge portion 1112. A thickness of the second sealing member 142 is t2, where 0.5 mm ≤ t2 ≤ 1 mm. In this way, difficulty in controlling a processing process caused by an excessively small thickness of the second sealing member 142 can be avoided, and impact on a bonding effect of the structural adhesive caused by an excessively large thickness of the second sealing member 142 can also be avoided. For example, the thickness of the second sealing member 142 may be 0.5 mm, 0.7 mm, 0.8 mm, or 1 mm.

In some embodiments, as shown in FIG. 8, the first sealing member 141 includes the third portion 141c, and the third portion 141c is sealed between the bushing 1122 and the peripheral wall of the first avoiding hole 1112a; and/or the second sealing member 142 includes a fifth portion 142c, and the fifth portion 142c is sealed between the bushing 1122 and the peripheral wall of the first avoiding hole 1112a. The following schemes are included: 1. The first sealing member 141 includes the third portion 141c, and the third portion 141c is sealed between the bushing 1122 and the peripheral wall of the first avoiding hole 1112a. 2. The second sealing member 142 includes the fifth portion 142c, and the fifth portion 142c is sealed between the bushing 1122 and the peripheral wall of the first avoiding hole 1112a. 3. The first sealing member 141 includes the third portion 141c, the second sealing member 142 includes the fifth portion 142c, and either of the third portion 141c and the fifth portion 142c is sealed between the bushing 1122 and the peripheral wall of the first avoiding hole 1112a. It can be learned that the first sealing member 141 and/or the second sealing member 142 further ensure/ensures the sealing between the bushing 1122 and the raised edge portion 1112, further improving the sealing performance of the tray assembly 1.

Optionally, when either of the first sealing member 141 and the second sealing member 142 is sealed between the bushing 1122 and the peripheral wall of the first avoiding hole 1112a, the first sealing member 141 and the second sealing member 142 may form an integral member, to further improve the sealing performance of the tray assembly 1. Certainly, when a portion of the first sealing member 141 or a portion of the second sealing member 142 is sealed between the bushing 1122 and the peripheral wall of the first avoiding hole 1112a, the first sealing member 141 and the second sealing member 142 may also form an integral member.

Optionally, a reserved gap p is provided between the bushing 1122 and the peripheral wall of the first avoiding hole 1112a, where 0.5 mm ≤ p ≤ 1 mm, to ensure that during the process of assembling the tray assembly 1, the first sealing member 141 and/or the second sealing member 142 overflow/overflows between the bushing 1122 and the peripheral wall of the first avoiding hole 1112a, to implement sealing between the bushing 1122 and the peripheral wall of the first avoiding hole 1112a.

In some embodiments, as shown in FIG. 8, a region of the bushing 1122 that abuts against the expansion beam 12 is an annular region. A radial distance between an outer circumferential edge and an inner circumferential edge of the annular region is greater than or equal to 1 mm, to ensure an effective abutment between the bushing 1122 and the expansion beam 12.

It should be noted that, in the description of the present invention, "annular" is to be understood in a broad sense, that is, not limited to "circular ring". For example, it may alternatively be "polygonal ring". The "annular region" may then refer to a circular annular region, a polygonal ring region, or the like. In the example of FIG. 8, the annular region of the bushing 1122 that abuts against the expansion beam 12 is a circular annular region. A radial distance between an outer circumferential edge and an inner circumferential edge of the circular annular region is y, where y is greater than or equal to 1 mm.

In some embodiments, either of the first sealing member 141 and the second sealing member 142 is a structural adhesive. The structural adhesive has good strength, corrosion resistance, and stable performance, to ensure service life of the tray assembly 1. A thickness of the structural adhesive is t, where 0.5 mm ≤ t ≤ 1 mm. In this way, difficulty in controlling a processing process caused by an excessively small thickness of the structural adhesive can be avoided, and impact on a bonding effect of the structural adhesive caused by an excessively large thickness of the structural adhesive can also be avoided. For example, the thickness t of the structural adhesive may be 0.5 mm, 0.7 mm, 0.8 mm, or 1 mm.

In some embodiments, the bottom plate 111 is an insulating material member. In this case, the bottom plate 111 has good electrical insulation. Even if cooling liquid of the power battery pack 100 leaks or the like, a risk of high-voltage arcing between the bottom plate 111 and the battery 2 can be avoided, ensuring normal use of the power battery pack 100.

Optionally, the bottom plate 111 is a composite material member. It is easy to ensure structural strength of the bottom plate 111 while ensuring electrical insulation of the bottom plate 111, so that the bottom plate 111 stably carries the battery 2.

In some embodiments, as shown in FIG. 2, FIG. 3, FIG. 8, and FIG. 9, the expansion beam 12 includes a carrying beam 1201 and a partition plate 1202. The carrying beam 1201 defines a carrying cavity 1201a. The partition plate 1202 is arranged in the carrying cavity 1201a to separate the carrying cavity 1201a into a first carrying cavity 1201b and a second carrying cavity 1201c. The first carrying cavity 1201b is located on one side of the second carrying cavity 1201c facing away from the raised edge portion 1112. It can be learned that when the expansion beam 12 is in use, the partition plate 1202 can act to transmit expansion force, to ensure a carrying capacity of the expansion beam 12.

For example, in the example of FIG. 8, the first sealing member 141 is arranged at least between the carrying beam 1201 and the raised edge portion 1112.

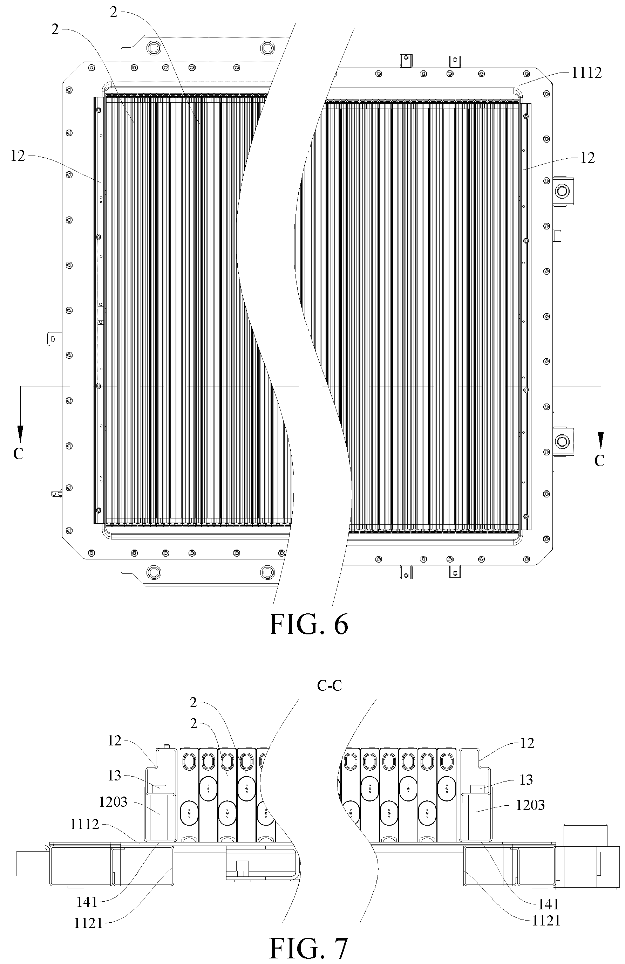

In some embodiments, as shown in FIG. 3 and FIG. 7, the partition plate 1202 is arranged horizontally. A height of the first carrying cavity 1201b is equal to a height of the second carrying cavity 1201c. For example, in an up-down direction, the partition plate 1202 is located substantially in a middle of the carrying cavity 1201a. When the battery 2 expands, a middle position of the battery 2 deforms the most in the up-down direction. In this case, an arrangement position of the partition plate 1202 can better match deformation distribution of the battery 2, to ensure that the expansion beam 12 stably withstands the expansion force of the battery 2.

For example, a surface of the expansion beam 12 facing the battery 2 is subjected to the expansion force of the battery 2. On the surface of the expansion beam 12, the closer to the middle position, the greater the force. By setting the height of the first carrying cavity 1201b equal to the height of the second carrying cavity 1201c, it is easy to ensure that the partition plate 1202 stably transmits the expansion force.

In some embodiments, as shown in FIG. 3 and FIG. 7, in a cross section of the expansion beam 12, the carrying beam 1201 and the partition plate 1202 define an "8"-shaped structure. In this case, a shape of a cross section of the carrying beam 1201 is a square structure, and two side surfaces of width of the carrying beam 1201 may be formed substantially into a plane. At least one of the two side surfaces may be arranged toward the battery 2 to form a carrying surface, then the carrying surface is a plane, so that the force on the expansion beam 12 is uniform. This helps avoid stress concentration of the expansion beam 12 due to uneven force, reduces a risk of bending of the expansion beam 12, and effectively ensures structural safety of the tray assembly 1. The cross section of the expansion beam 12 is perpendicular to a length direction of the expansion beam 12.

It may be understood that, during a process of mounting and using the expansion beam 12, if the expansion beam 12 interferes with another structure such as a cooling pipe, an avoiding portion may be provided on the carrying beam 1201, to ensure smooth mounting of the expansion beam 12 after ensuring structural strength of the carrying beam 1201.

In some embodiments, as shown in FIG. 3 and FIG. 7, the carrying beam 1201 and the partition plate 1202 form an integral bent member, and a quantity of bending times is small. This simplifies a bending process and reduces processing costs.

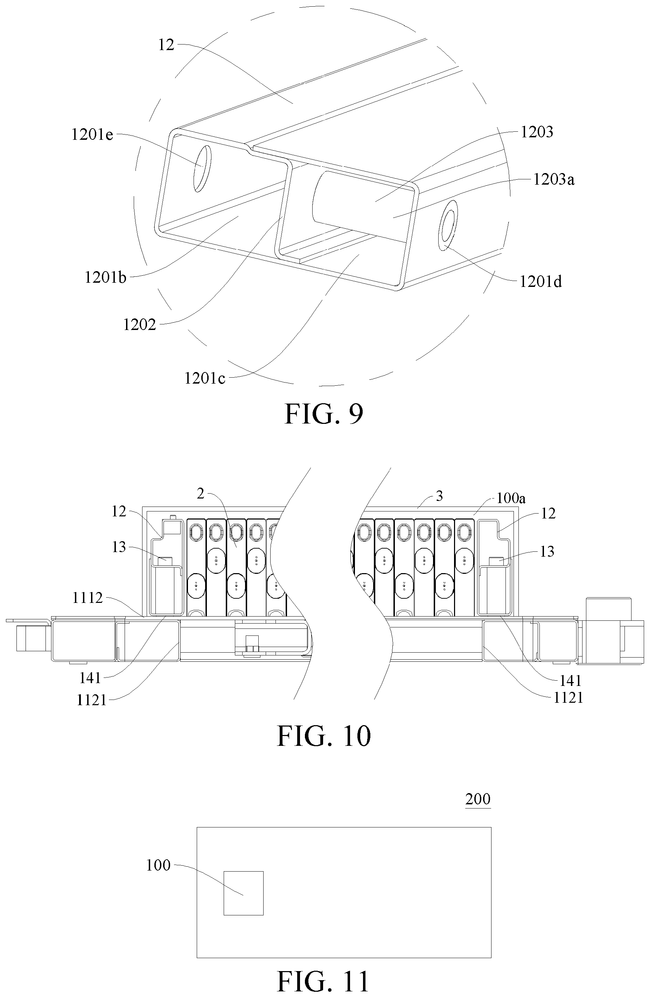

For example, in the example of FIG. 9, for a front expansion beam 12 and a middle expansion beam 12, the carrying beam 1201 and the partition plate 1202 need to be bent 7 times in the bending process, which is a simple and convenient process.

In some embodiments, as shown in FIG. 2 and FIG. 3, the partition plate 1202 has a segmentation portion 1202a and a connecting portion 1202b. The segmentation portion 1202a is located between the first carrying cavity 1201b and the second carrying cavity 1201c. At least one of two opposite ends of the segmentation portion 1202a is provided with the connecting portion 1202b. The connecting portion 1202b is superimposed with a cavity wall of the carrying cavity 1201a, and the connecting portion 1202b is fixedly connected to the cavity wall of the carrying cavity 1201a. A length of the connecting portion 1202b in a normal direction of the segmentation portion 1202a is x, where 6 mm ≤ x ≤ 12 mm. In this way, by properly setting the length of the connecting portion 1202b, a connection area between the connecting portion 1202b and the cavity wall of the carrying cavity 1201a can be ensured, so that connection strength between the connecting portion 1202b and the cavity wall of the carrying cavity 1201a is ensured, to ensure a stable arrangement of the partition plate 1202.

When the two opposite ends of the segmentation portion 1202a are respectively arranged with connecting portions 1202b, lengths of the two connecting portions 1202b in the normal direction of the segmentation portion 1202a may be equal or not equal.

It may be understood that, when the carrying beam 1201 and the partition plate 1202 form the integral bent member, the length of the connecting portion 1202b is in a range of 6 mm to 12 mm, to ensure bending convenience of the partition plate 1202, which helps reduce difficulty of processing. In this case, a steel plate corresponding to the expansion beam 12 has an overlapping portion at the connecting portion 1202b only. In this way, in the present invention, the expansion beam 12 has a small amount of material and low costs.

Optionally, the connecting portion 1202b and the cavity wall of the carrying cavity 1201a are welded and fixed, to ensure a sufficient welding region between the connecting portion 1202b and the cavity wall of the carrying cavity 1201a. Therefore, welding strength between the connecting portion 1202b and the cavity wall of the carrying cavity 1201a is ensured, improving a structural stability of the carrying cavity 1201a.

In some embodiments, as shown in FIG. 8, the tray assembly 1 further includes the fastener 13. The expansion beam 12 further includes a support member 1203. The support member 1203 is arranged in the second carrying cavity 1201c, and the support member 1203 supports the partition plate 1202 and one cavity wall of the second carrying cavity 1201c away from the partition plate 1202, so that the support member 1203 can perform a good support function on the second carrying cavity 1201c. This effectively ensures a structural stability of the second carrying cavity 1201c during a process of mounting the expansion beam 12, using the expansion beam 12, or the like, to avoid large deformation of the second carrying cavity 1201c, ensuring reliable use of the expansion beam 12. The fastener 13 penetrates the partition plate 1202 and the second carrying cavity 1201c, and the fastener 13 extends out of the second carrying cavity 1201c to fix the expansion beam 12 to the side beam 1121. Because the support member 1203 is arranged in the second carrying cavity 1201c, the support member 1203 can carry fastening force of the fastener 13, to avoid large deformation of the partition plate 1202 easily caused by excessive fastening force, effectively ensuring the carrying capacity of the expansion beam 12.

It can be learned that, in the present invention, arranging the support member 1203 is helpful to reduce an arrangement requirement of the fastener 13. To be specific, when the fastener 13 is arranged, there is no need to consider a situation that the fastening force causes the large deformation of the partition plate 1202. This facilitates arrangement of the fastener 13.

For example, in the example of FIG. 9, one cavity wall of the first carrying cavity 1201b facing away from the second carrying cavity 1201c forms an avoiding through hole 1201e. Taking a plane perpendicular to an axial direction of the avoiding through hole 1201e as a projection surface, an orthographic projection of a hole wall of the avoiding through hole 1201e on the projection surface is located outside an outer contour of an orthographic projection of the fastener 13 on the projection surface, so that the fastener 13 can penetrate the partition plate 1202 and the second carrying cavity 1201c through the avoiding through hole 1201e. The fastener 13 is a bolt. The partition plate 1202 forms a mating through hole. The fastener 13 penetrates the mating through hole, and one end of the fastener 13 abuts against one side of the partition plate 1202 facing away from the second carrying cavity 1201c. The other end of the fastener 13 is located outside the second carrying cavity 1201c, and the other end of the fastener 13 is fixedly connected to the side beam 1121.

In some embodiments, as shown in FIG. 3 and FIG. 8, the fastener 13 penetrates the support member 1203, that is, the support member 1203 forms a through hole. The fastener 13 penetrates the through hole, and the fastener 13 extends out of the through hole to be fixedly connected to the side beam 1121. In this case, an edge portion of the through hole can stably carry the fastening force, so that either of the support member 1203 and the fastener 13 is evenly forced. This helps further avoid the large deformation of the partition plate 1202.

Certainly, the present invention is not limited thereto. In other embodiments, the support member 1203 includes multiple support blocks 1203a. The multiple support blocks 1203a are arranged spaced away along a second direction. The fastener 13 is arranged between two adjacent support blocks 1203a, so that the two adjacent support blocks 1203a can carry the fastening force of the fastener 13.

Optionally, when the through hole is a circular hole, a diameter of the through hole is greater than or equal to an outer diameter of the fastener 13.

In some embodiments, the support member 1203 includes multiple support blocks 1203a. The multiple support blocks 1203a are arranged spaced away along a length direction of the carrying beam 1201. Each fastener 13 penetrates a corresponding support block 1203a. In this case, multiple fasteners 13 are arranged spaced away along the second direction, to ensure mounting and fixing of the entire expansion beam 12 while ensure that the entire partition plate 1202 does not undergo the large deformation.

It may be understood that a quantity of support blocks 1203a may be greater than or equal to a quantity of fasteners 13. Optionally, the quantity of support blocks 1203a is n, where 4 ≤ n ≤ 8, but is not limited thereto.

In some embodiments, an area of a cross section of the support member 1203 is s1, and an area of a cross section of the second carrying cavity 1201c is s2, where 50% ≤ s1/s2 ≤ 60%. Either of the cross section of the support member 1203 and the cross section of the second carrying cavity 1201c is perpendicular to the length direction of the carrying beam 1201. In this way, a relative size of the area of the cross section of the support member 1203 and the area of the cross section of the second carrying cavity 1201c is proper. This facilitates a smooth arrangement of the support block 1203a in the second carrying cavity 1201c, and in addition, ensures a good carrying capacity of the support member 1203.

Optionally, s1/s2 may be 0.5, 0.52, 0.53, 0.55, 0.58, 0.6, or the like.

In some embodiments, as shown in FIG. 8 and FIG. 9, one cavity wall of the second carrying cavity 1201c away from the first carrying cavity 1201b forms (or has) a mounting through hole 1201d, and a support member 1203 is arranged in the second carrying cavity 1201c. One end of the support member 1203 abuts against the partition plate 1202. The other end of the support member 1203 is fitted with the mounting through hole 1201d, and the other end of the support member 1203 is fixedly connected (for example, welded and fixed) to the cavity wall of the second carrying cavity 1201c away from the partition plate 1201, to ensure that the support member 1203 effectively supports the second carrying cavity 1201c. This avoids the large deformation of the second carrying cavity 1201c, and in addition, avoids a misalignment of the support member 1203 relative to the second carrying cavity 1201c, ensuring a stable arrangement of the support member 1203. In this case, the first sealing member 141 may be arranged between the carrying beam 1201 and the raised edge portion 1112, and between the support member 1203 and the raised edge portion 1112.

Optionally, taking a plane perpendicular to an axial direction of the mounting through hole 1201d as a projection surface, an orthographic projection of a hole wall of the mounting through hole 1201d on the projection surface is located outside an outer contour of an orthographic projection of the support member 1203 on the projection surface, so that the support member 1203 is adapted to be arranged in the second carrying cavity 1201c through the mounting through hole 1201d. That is, the mounting through hole 1201d can allow the support member 1203 to pass through, to facilitate mounting of the support member 1203. Certainly, the arrangement of the support member 1203 is not limited thereto. In other embodiments, the support member 1203 may alternatively be arranged inside the second carrying cavity 1201c through one end of the second carrying cavity 1201c in the second direction. At this case, two ends of the support member 1203 in a first direction may respectively abut against corresponding cavity walls of the second carrying cavity 1201c, and the support member 1203 can also effectively support the second carrying cavity 1201c.

In some embodiments, as shown in FIG. 8, the side frame 112 includes the bushing 1122. The bushing 1122 is fixedly connected to the expansion beam 12 and the fastener 13 separately, and one end of the bushing 1122 adjacent to the expansion beam 12 abuts against the support member 1203. The bushing 1122 tightly abuts against the support member 1203 under an action of the fastener 13. This helps further improve the connection strength between the side beam 1121 and the expansion beam 12.

Optionally, the bushing 1122 and the side beam 1121 are welded and fixed.

Optionally, a region of the bushing 1122 that abuts against the support member 1203 is an annular region. A radial distance between an outer circumferential edge and an inner circumferential edge of the annular region is greater than or equal to 1 mm, to ensure an effective abutment between the bushing 1122 and the support member 1203.

Optionally, a wall thickness of the bushing 1122 is equal to a wall thickness of the support member 1203.

According to embodiments of a second aspect of the present invention, as shown in FIG. 10, a power battery pack 100 includes a battery 2, a sealing cover 3, and the tray assembly 1 according to the embodiments of the first aspect of the present invention. The sealing cover 3 covers an open side of the accommodating cavity 110, and the sealing cover 3 together with the tray assembly 1 defines a mounting space 100a. The battery 2 is provided in the mounting space 100a.

According to the embodiments of the present invention, the power battery pack 100 uses the foregoing tray assembly 1, to meet a sealing requirement of the power battery pack 100.

In some embodiments, as shown in FIG. 1, FIG. 3, FIG. 5, and FIG. 7, multiple batteries 2 exist, and the multiple batteries 2 are arranged in a first direction (for example, a direction AA' in FIG. 5). Each of the batteries 2 extends along a second direction (for example, a direction DD' in FIG. 5), where the second direction is perpendicular to the first direction. A quantity of expansion beams 12 is two, and the two expansion beams 12 are respectively arranged on two sides of the multiple batteries 2 in the first direction. To be specific, one expansion beam 12 is arranged on one side of the multiple batteries 2 in the first direction, and the other expansion beam 12 is arranged on the other side of the multiple batteries 2 in the first direction. A direction of expansion force of the battery 2 is substantially parallel to the first direction. Either of the expansion beams 12 extends along the second direction, so that either of the expansion beams 12 withstands the expansion force of the entire battery 2.

In this way, by arranging the expansion beams 12 respectively on two sides in an arrangement direction of the multiple batteries 2, a small quantity of expansion beams 12 is used to withstand the expansion force of the battery 2, ensuring safe use of the power battery pack 100.

According to embodiments of a third aspect of the present invention, as shown in FIG. 11, a vehicle 200 includes the power battery pack 100 according to the embodiments of the second aspect of the present invention.

According to the embodiments of the present invention, the vehicle 200 uses the foregoing power battery pack 100, to ensure safe use of the vehicle.

Other configurations and operations of the vehicle 200 according to the embodiments of the present invention are known to a person of ordinary skill in the art and will not be described in detail herein.

In the description of the present invention, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present invention. In addition, a feature defined to be "first" or "second" may explicitly or implicitly include one or more features. In the description of the present invention, unless otherwise stated, "a plurality of" means two or more than two.

In the description of the present invention, it should be noted that, unless otherwise explicitly specified or defined, the terms such as "mount", "connect", and "connection" should be understood in a broad sense. For example, the connection may be a fixed connection, a detachable connection, or an integral connection; the connection may be a mechanical connection or an electrical connection; or the connection may be a direct connection, an indirect connection through an intermediate medium, or internal communication between two components. A person of ordinary skill in the art may understand specific meanings of the foregoing terms in the present invention according to specific situations.

In the descriptions of this specification, descriptions of a reference term such as "an embodiment", "some embodiments", "an exemplary embodiment", "an example", "a specific example", or "some examples" means that a specific feature, structure, material, or characteristic that is described with reference to the embodiment or the example is included in at least one embodiment or example of the present invention. In this specification, schematic descriptions of the foregoing terms do not necessarily refer to the same embodiment or example. In addition, the specific feature, the structure, the material, or the characteristic that is described may be combined in a proper manner in any one or more of the embodiments or examples.

Although the embodiments of the present invention have been shown and described, a person of ordinary skill in the art may understand that various changes, modifications, replacements, and variations may be made to the embodiments without departing from the principles of the present invention, and the scope of the present invention is as defined by the appended claims.

In the drawings:
Vehicle 200; power battery pack 100; battery 2; sealing cover 3;
tray assembly 1;
tray 11; accommodating cavity 110; bottom plate 111; side frame 112; side beam 1121; second avoiding hole 1121a; bushing 1122; connecting hole 1122a;
main body portion 1111; raised edge portion 1112; first avoiding hole 1112a;
expansion beam 12;
carrying beam 1201; carrying cavity 1201a; first carrying cavity 1201b; second carrying cavity 1201c;
mounting through hole 1201d; avoiding through hole 1201e;
partition plate 1202; segmentation portion 1202a; connecting portion 1202b;
support member 1203; support block 1203a;
fastener 13;
first sealing member 141; first portion 141a; third portion 141c; second sealing member 142; fourth portion 142a; and fifth portion 142c.

## Claims

1. A tray assembly (1), comprising:
a bottom plate (111), the bottom plate (111) comprising a main body portion (1111) and a raised edge portion (1112), the main body portion (1111) defining an accommodating cavity (110), the accommodating cavity (110) being configured to accommodate a battery (2), and the raised edge portion (1112) being located on a peripheral side of the main body portion (1111) and arranged around the main body portion (1111);
an expansion beam (12), the expansion beam (12) being arranged on one side of the raised edge portion (1112) in a thickness direction, and the expansion beam (12) being adapted to abut with the battery (2); and
a first sealing member (141), the first sealing member (141) comprising a first portion (141a), **characterised in that** the first portion (141a) being arranged between the expansion beam (12) and the raised edge portion (1112).

2. The tray assembly (1) according to claim 1, further comprising:
a side frame (112), the side frame (112) being located on a peripheral side of the bottom plate (111) and arranged around the main body portion (1111), the side frame (112) comprising a plurality of side beams (1121) connected end to end in sequence, the side beam (1121) being located on the other side of the raised edge portion (1112) in the thickness direction and fixed to the raised edge portion (1112), and the raised edge portion (1112) forming a first avoiding hole (1112a); and
a fastener (13), the fastener (13) penetrating the first avoiding hole (1112a) and fixedly connecting the expansion beam (12) to a corresponding side beam (1121), and the first portion (141a) being arranged around the first avoiding hole (1112a),
particularly wherein the first sealing member (141) further comprises a second portion, and the second portion is sealed between the fastener (13) and a peripheral wall of the first avoiding hole (1112a), or
particularly wherein the side frame (112) further comprises a bushing (1122), the bushing (1122) penetrating the first avoiding hole (1112a) and being fixed to the side beam (1121), the bushing (1122) forms a connecting hole (1122a), the fastener (13) being fixedly fitted with the connecting hole (1122a); and
the first sealing member (141) further comprises a third portion (141c), and the third portion (141c) being sealed between the bushing (1122) and a peripheral wall of the first avoiding hole (1112a).

3. The tray assembly (1) according to any one of claims 1 to 2, further comprising:
a second sealing member (142), the second sealing member (142) comprising a fourth portion (142a), and the fourth portion (142a) being arranged between the side beam (1121) and
the raised edge portion (1112),
particularly wherein the fourth portion (142a) is arranged around the fastener (13),
and/or wherein the side frame (112) further comprises the bushing (1122), the side beam (1121) forms a second avoiding hole (1121a), the bushing (1122) being fixed to the side beam (1121) and at least a portion of the bushing (1122) is located on one side of the second avoiding hole (1121a) facing away from the raised edge portion, the bushing (1122) forms a connecting hole (1122a), and the fastener (13) penetrating the second avoiding hole (1121a) and being fixedly fitted with the connecting hole (1122a).

4. The tray assembly (1) according to any one of claims 1 to 3, wherein one end of the bushing (1122) protrudes from one side of the raised edge portion (1112) facing the expansion beam (12) and abuts against the expansion beam (12),
and/or wherein the bushing (1122) and a peripheral wall of the second avoiding hole (1121a) are welded and fixed, and the second sealing member (142) covers a welding seam at the second avoiding hole (1121a).

5. The tray assembly (1) according to any one of claims 1 to 4, wherein
the first sealing member (141) comprises the third portion (141c), and the third portion being sealed between the bushing (1122) and the peripheral wall of the first avoiding hole (1112a); and/or
the second sealing member (142) comprises a fifth portion (142c), and the fifth portion (142c) being sealed between the bushing (1122) and the peripheral wall of the first avoiding hole (1112a),
and/or wherein a region of the bushing (1122) that abuts against the expansion beam (12) is an annular region, and a radial distance between an outer circumferential edge and an inner circumferential edge of the annular region is greater than or equal to 1 mm.

6. The tray assembly (1) according to any one of claims 1 to 5, wherein either of the first sealing member (141) and the second sealing member (142) is a structural adhesive, a thickness of the structural adhesive is t, and 0.5 mm ≤ t ≤ 1 mm,
and/or wherein the bottom plate (111) is an insulating material member.

7. The tray assembly (1) according to any one of claims 1 to 6, wherein the expansion beam (12) comprises a carrying beam (1201) and a partition plate (1202), the carrying beam (1201) defining a carrying cavity (1201a), the partition plate (1202) being arranged in the carrying cavity (1201a) to separate the carrying cavity (1201a) into a first carrying cavity (1201b) and a second carrying cavity (1201c), and the first carrying cavity (1201b) being located on one side of the second carrying cavity (1201c) facing away from the raised edge portion (1112).

8. The tray assembly (1) according to any one of claims 1 to 7, further comprising the fastener (13), and the expansion beam (12) further comprising:
a support member (1203), the support member (1203) being arranged in the second carrying cavity (1201c), the support member (1203) supporting one cavity wall of the second carrying cavity (1201c) away from the partition plate (1202) and the partition plate (1202), and the fastener (13) penetrating the partition plate (1202) and the second carrying cavity (1201c) and extending out of the second carrying cavity (1201c) to fix the expansion beam (12) to the side beam (1121).

9. The tray assembly (1) according to any one of claims 1 to 8, wherein the support member (1203) comprises a plurality of support blocks (1203a), the plurality of support blocks (1203a) being arranged spaced away along a length direction of the carrying beam (1201), and each fastener (13) penetrating a corresponding support block (1203a).

10. The tray assembly (1) according to any one of claims 1 to 9, wherein an area of a cross section of the support member (1203) is s1, an area of a cross section of the second carrying cavity (1201c) is s2, 50% ≤ s1/s2 ≤ 60%, and either of the cross section of the support member (1203) and the cross section of the second carrying cavity (1201c) is perpendicular to the length direction of the carrying beam (1201).

11. The tray assembly (1) according to any one of claims 1 to 10, wherein one cavity wall of the second carrying cavity (1201c) away from the first carrying cavity (1201b) forms a mounting through hole (1201d), the support member (1203) is arranged in the second carrying cavity (1201c), one end of the support member (1203) abuts against the partition plate (1202), and the other end of the support member (1203) is fitted with the mounting through hole (1201d) and fixedly connected to the cavity wall of the second carrying cavity (1201c) away from the partition plate (1202).

12. The tray assembly (1) according to any one of claims 1 to 11, wherein the side frame (112) comprises the bushing (1122), the bushing (1122) being fixedly connected to the expansion beam (12) and the fastener (13) separately, and one end of the bushing (1122) adjacent to the expansion beam (12) abut against the support member (1203).

13. A power battery pack (100), comprising a battery (2), a sealing cover (3), and the tray assembly (1) according to any one of claims 1 to 12, the sealing cover (3) covering an open side of the accommodating cavity (110) and together with the tray assembly (1) defining a mounting space (100a), and the battery (2) being provided in the mounting space (100a).

14. The power battery pack (100) according to claim 13, comprising a plurality of batteries (2), the plurality of batteries (2) being arranged in a first direction in sequence, each of the batteries (2) extending along a second direction, a quantity of expansion beams (12) being two, the two expansion beams (12) being respectively arranged on two sides of the plurality of batteries (2) in the first direction, either of the expansion beams (12) extending along the second direction, and the second direction being perpendicular to the first direction.

15. A vehicle (200), comprising the power battery pack (100) according to claim 13 or 14.

## Patentansprüche

1. Eine Schalenanordnung bzw. Trägerbaugruppe (1), umfassend:
eine Bodenplatte (111), wobei die Bodenplatte (111) einen Hauptkörperabschnitt (1111) und einen erhöhten Randabschnitt (1112) umfasst, wobei der Hauptkörperabschnitt (1111) einen Aufnahmeraum (110) definiert, wobei der Aufnahmeraum (110) dazu konfiguriert ist, eine Batterie (2) aufzunehmen, wobei sich der erhöhte Randabschnitt (1112) an einer Umfangsseite des Hauptkörperabschnitts (1111) befindet und um den Hauptkörperabschnitt (1111) herum angeordnet ist;
einen Spreiz- bzw. Expansionsbalken (12), wobei der Spreizbalken (12) in einer Dickenrichtung auf einer Seite des erhöhten Randabschnitts (1112) angeordnet ist und der Spreizbalken (12) so ausgebildet ist, dass er an der Batterie (2) anliegt; und
ein erstes Dichtungselement (141), wobei das erste Dichtungselement (141) einen ersten Abschnitt (141a) umfasst, **dadurch gekennzeichnet, dass** der erste Abschnitt (141a) zwischen dem Expansionsbalken (12) und dem erhöhten Randabschnitt (1112) angeordnet ist.

2. Die Schalenanordnung (1) gemäß Anspruch 1, ferner umfassend:
einen Seitenrahmen (112), wobei der Seitenrahmen (112) an einer Umfangsseite der Bodenplatte (111) angeordnet ist und um den Hauptkörperabschnitt (1111) herum angeordnet ist, wobei der Seitenrahmen (112) eine Vielzahl von Seitenbalken (1121) umfasst, die nacheinander Ende an Ende verbunden sind, wobei sich der Seitenbalken (1121) in Dickenrichtung auf der anderen Seite des erhöhten Randabschnitts (1112) befindet und an dem erhöhten Randabschnitt (1112) befestigt ist, und wobei der erhöhte Randabschnitt (1112) ein erstes Ausweichloch (1112a) bildet; und
ein Befestigungselement (13), wobei das Befestigungselement (13) das erste Ausweichloch (1112a) durchdringt und den Expansionsträger (12) fest mit einem entsprechenden Seitenträger (1121) verbindet, und wobei der erste Abschnitt (141a) um das erste Ausweichloch (1112a) herum angeordnet ist,
insbesondere wobei das erste Dichtungselement (141) ferner einen zweiten Abschnitt umfasst und der zweite Abschnitt zwischen dem Befestigungselement (13) und einer Umfangswand des ersten Ausweichlochs (1112a) abgedichtet ist, oder
insbesondere wobei der Seitenrahmen (112) ferner eine Buchse (1122) umfasst, wobei die Buchse (1122) das erste Ausweichloch (1112a) durchdringt und am Seitenträger (1121) befestigt ist, wobei die Buchse (1122) ein Verbindungsloch (1122a) bildet, wobei das Befestigungselement (13) fest in das Verbindungsloch (1122a) eingepasst ist; und
das erste Dichtungselement (141) ferner einen dritten Abschnitt (141c) umfasst, und der dritte Abschnitt (141c) zwischen der Buchse (1122) und einer Umfangswand des ersten Ausweichlochs (1112a) abgedichtet ist.

3. Die Schalenanordnung (1) gemäß Anspruch 1 bis 2, ferner umfassend:
ein zweites Dichtungselement (142), wobei das zweite Dichtungselement (142) einen vierten Abschnitt (142a) umfasst und der vierte Abschnitt (142a) zwischen dem Seitenträger (1121) und dem erhöhten Randabschnitt (1112) angeordnet ist,
insbesondere wobei der vierte Abschnitt (142a) um das Befestigungselement (13) herum angeordnet ist,
und/oder wobei der Seitenrahmen (112) ferner die Buchse (1122) umfasst, der Seitenträger (1121) ein zweites Ausweichloch (1121a) bildet, die Buchse (1122) am Seitenträger (1121) befestigt ist und sich zumindest ein Abschnitt der Buchse (1122) auf einer Seite des zweiten Ausweichlochs (1121a) befindet, die vom erhöhten Randabschnitt weg zeigt, die Buchse (1122) ein Verbindungsloch (1122a) bildet und das Befestigungselement (13) das zweite Ausweichloch (1121a) durchdringt und fest mit dem Verbindungsloch (1122a) verbunden ist.

4. Die Schalenanordnung (1) gemäß Anspruch 1 bis 3, wobei ein Ende der Buchse (1122) von einer Seite des erhöhten Randabschnitts (1112) hervorragt, die dem Spreizbalken (12) zugewandt ist, und an den Spreizbalken (12) anstößt,
und/oder wobei die Buchse (1122) und eine Umfangswand des zweiten Ausweichlochs (1121a) verschweißt und befestigt sind und das zweite Dichtungselement (142) eine Schweißnaht am zweiten Ausweichloch (1121a) abdeckt.

5. Die Schalenanordnung (1) gemäß Anspruch 1 bis 4, wobei
das erste Dichtungselement (141) den dritten Abschnitt (141c) umfasst, und der dritte Abschnitt zwischen der Buchse (1122) und der Umfangswand der ersten Ausweichöffnung (1112a) abgedichtet ist; und/oder
das zweite Dichtungselement (142) einen fünften Abschnitt (142c) umfasst, wobei der fünfte Abschnitt (142c) zwischen der Buchse (1122) und der Umfangswand der ersten Ausweichöffnung (1112a) abgedichtet ist,
und/oder wobei ein Bereich der Buchse (1122), der an den Expansionsbalken (12) anstößt, ein ringförmiger Bereich ist und ein radialer Abstand zwischen einer äußeren Umfangskante und einer inneren Umfangskante des ringförmigen Bereichs größer oder gleich 1 mm ist.

6. Die Schalenanordnung (1) gemäß einem der Ansprüche 1 bis 5, wobei entweder das erste Dichtungselement (141) oder das zweite Dichtungselement (142) ein Strukturklebstoff ist, eine Dicke des Strukturklebstoffs t beträgt und 0,5 mm ≤ t ≤ 1 mm gilt,
und/oder wobei die Bodenplatte (111) ein Element aus Isoliermaterial ist.

7. Die Schalenanordnung (1) gemäß einem der Ansprüche 1 bis 6, wobei der Spreizbalken (12) einen Tragbalken (1201) und eine Trennplatte (1202) umfasst, wobei der Tragbalken (1201) einen Traghohlraum (1201a) definiert, wobei die Trennplatte (1202) in dem Traghohlraum (1201a) angeordnet ist, um den Traghohlraum (1201a) in einen ersten Traghohlraum (1201b) und einen zweiten Traghohlraum (1201c)zu unterteilen, wobei sich der erste Aufnahmeraum (1201b) auf einer Seite des zweiten Aufnahmeraums (1201c) befindet, die dem erhöhten Randabschnitt (1112) abgewandt ist.

8. Die Schalenanordnung (1) gemäß einem der Ansprüche 1 bis 7, ferner umfassend das Befestigungselement (13), und wobei der Spreizbalken (12) ferner umfasst:
ein Stützelement (1203), wobei das Stützelement (1203) in dem zweiten Aufnahmeraum (1201c) angeordnet ist, wobei das Stützelement (1203) eine Wand des zweiten Aufnahmeraums (1201c) von der Trennplatte (1202) weg stützt und die Trennplatte (1202), und wobei das Befestigungselement (13) die Trennplatte (1202) und den zweiten Aufnahmeraum (1201c) durchdringt und aus dem zweiten Aufnahmeraum (1201c) herausragt, um den Spreizträger (12) am Seitenträger (1121) zu befestigen.

9. Die Ablageanordnung (1) gemäß einem der Ansprüche 1 bis 8, wobei das Stützelement (1203) eine Vielzahl von Stützblöcken (1203a) umfasst, wobei die Vielzahl von Stützblöcken (1203a) in Abständen entlang einer Längsrichtung des Tragbalkens (1201) angeordnet ist und jedes Befestigungselement (13) einen entsprechenden Stützblock durchdringt (1203a) durchdringt.

10. Die Ablageanordnung (1) gemäß einem der Ansprüche 1 bis 9, wobei die Querschnittsfläche des Stützelements (1203) s1 beträgt, die Querschnittsfläche des zweiten Traghohlraums (1201c) s2 beträgt, 50 % ≤ s1/s2 ≤ 60 % ist und entweder der Querschnitt des Stützelements (1203) oder der Querschnitt des zweiten Traghohlraums (1201c) senkrecht zur Längsrichtung des Tragbalkens (1201) verläuft.

11. Die Schalenanordnung (1) gemäß einem der Ansprüche 1 bis 10, wobei eine von der ersten Tragaussparung (1201b) abgewandte Wand der zweiten Tragaussparung (1201c) ein Befestigungsdurchgangsloch (1201d) bildet, das Stützelement (1203) in der zweiten Tragaussparung (1201c) angeordnet ist, ein Ende des Stützelements (1203) an der Trennplatte (1202) anliegt, und das andere Ende des Stützelements (1203) in das Befestigungsdurchgangsloch (1201d) eingepasst und fest mit der von der Trennplatte (1202) abgewandten Wand des zweiten Aufnahmeraums (1201c) verbunden ist.

12. Die Schalenanordnung (1) gemäß einem der Ansprüche 1 bis 11, wobei der Seitenrahmen (112) die Buchse (1122) umfasst, wobei die Buchse (1122) separat mit dem Spreizbalken (12) und dem Befestigungselement (13) fest verbunden ist und ein dem Spreizbalken (12) benachbartes Ende der Buchse (1122) an dem Stützelement (1203) anliegt.

13. Ein Leistungsbatteriepack (100), umfassend eine Batterie (2), eine Verschlussabdeckung bzw. Abdeckkappe (3), und die Schalenbaugruppe (1) gemäß einem der Ansprüche 1 bis 12, wobei die Abdeckkappe (3) eine offene Seite des Aufnahmeraums (110) abdeckt und zusammen mit der Schalenbaugruppe (1) einen Einbauraum (100a) bildet, und wobei die Batterie (2) in dem Einbauraum (100a) vorgesehen ist.

14. Das Leistungsbatteriepack (100) gemäß Anspruch 13, umfassend eine Vielzahl von Akkus (2), wobei die Vielzahl von Akkus (2) in einer ersten Richtung nacheinander angeordnet ist, wobei sich jede der Batterien (2) entlang einer zweiten Richtung erstreckt, wobei die Anzahl der Spreizbalken (12) zwei beträgt, wobei die beiden Spreizbalken (12) jeweils an zwei Seiten der mehreren Batterien (2) in der ersten Richtung angeordnet sind, wobei sich jeder der Spreizbalken (12) entlang der zweiten Richtung erstreckt und wobei die zweite Richtung senkrecht zur ersten Richtung verläuft.

15. Ein Fahrzeug (200), das die Leistungsbatteriepack (100) gemäß Anspruch 13 oder 14 umfasst.

## Revendications

1. Ensemble de plateau (1), comprenant :
une plaque de fond (111), la plaque de fond (111) comprenant une partie de corps principal (1111) et une partie de rebord surélevé (1112), la partie de corps principal (1111) définissant une cavité de logement (110), la cavité de logement (110) étant configurée pour loger une batterie (2), et la partie de bord surélevée (1112) étant située sur un côté périphérique de la partie de corps principal (1111) et disposée autour de la partie de corps principal (1111) ;
une poutre d'expansion (12), la poutre d'expansion (12) étant disposée sur un côté de la partie de bord surélevée (1112) dans le sens de l'épaisseur, et la poutre d'expansion (12) étant adaptée pour venir en butée contre la batterie (2) ; et
un premier élément d'étanchéité (141), le premier élément d'étanchéité (141) comprenant une première partie (141a), **caractérisé en ce que** la première partie (141a) est disposée entre la poutre d'expansion (12) et la partie de bord surélevée (1112).

2. L'ensemble de plateau (1) selon la revendication 1, comprenant en outre :
un cadre latéral (112), le cadre latéral (112) étant situé sur un côté périphérique de la plaque de fond (111) et disposé autour de la partie de corps principal (1111), le cadre latéral (112) comprenant une pluralité de poutres latérales (1121) reliées bout à bout en séquence, la poutre latérale (1121) étant située de l'autre côté de la partie de bord surélevée (1112) dans le sens de l'épaisseur et fixée à la partie de bord surélevée (1112), et la partie de bord surélevée (1112) formant un premier trou d'évitement (1112a) ; et
une fixation (13), la fixation (13) pénétrant dans le premier trou d'évitement (1112a) et reliant de manière fixe la poutre d'expansion (12) à une poutre latérale correspondante (1121), et la première partie (141a) étant disposée autour du premier trou d'évitement (1112a),
en particulier dans lequel le premier élément d'étanchéité (141) comprend en outre une deuxième partie, et la deuxième partie est scellée entre l'élément de fixation (13) et une paroi périphérique du premier trou d'évitement (1112a), ou
en particulier dans lequel le cadre latéral (112) comprend en outre une douille (1122), la douille (1122) pénétrant dans le premier trou d'évitement (1112a) et étant fixée à la poutre latérale (1121), la douille (1122) formant un trou de connexion (1122a), l'élément de fixation (13) étant ajusté de manière fixe dans le trou de connexion (1122a) ; et
le premier élément d'étanchéité (141) comprend en outre une troisième partie (141c), et la troisième partie (141c) étant scellée entre la douille (1122) et une paroi périphérique du premier trou d'évitement de l' e (1112a).

3. L'ensemble de plateau (1) selon l'une quelconque des revendications 1 à 2, comprenant en outre :
un deuxième élément d'étanchéité (142), le deuxième élément d'étanchéité (142) comprenant une quatrième partie (142a), et la quatrième partie (142a) étant disposée entre la poutre latérale (1121) et la partie de bord surélevée (1112),
en particulier dans lequel la quatrième partie (142a) est disposée autour de l'élément de fixation (13),
et/ou dans lequel le cadre latéral (112) comprend en outre la douille (1122), la poutre latérale (1121) formant un deuxième trou d'évitement (1121a), la douille (1122) étant fixée à la poutre latérale (1121) et au moins une partie de la douille (1122) étant située sur un côté du deuxième trou d'évitement (1121a) opposé à la partie de bord surélevée, la douille (1122) forme un trou de raccordement (1122a), et l'élément de fixation (13) pénètre dans le deuxième trou d'évitement (1121a) et est ajusté de manière fixe dans le trou de raccordement (1122a).

4. L'ensemble de plateau (1) selon l'une quelconque des revendications 1 à 3, dans lequel une extrémité de la douille (1122) fait saillie d'un côté de la partie de bord surélevée (1112) faisant face à la poutre d'expansion (12) et vient en butée contre la poutre d'expansion (12), et/ou dans lequel la douille (1122) et une paroi périphérique du deuxième trou d'évitement (1121a) sont soudées et fixées, et le deuxième élément d'étanchéité (142) recouvre un cordon de soudure au niveau du deuxième trou d'évitement (1121a).

5. L'ensemble de plateau (1) selon l'une quelconque des revendications 1 à 4, dans lequel
le premier élément d'étanchéité (141) comprend la troisième partie (141c), et la troisième partie étant scellée entre la douille (1122) et la paroi périphérique du premier trou d'évitement (1112a) ; et/ou
le deuxième élément d'étanchéité (142) comprend une cinquième partie (142c), et la cinquième partie (142c) est scellée entre la douille (1122) et la paroi périphérique du premier trou d'évitement (1112a),
et/ou dans lequel une région de la douille (1122) qui vient en butée contre la poutre d'expansion (12) est une région annulaire, et une distance radiale entre un bord circonférentiel extérieur et un bord circonférentiel intérieur de la région annulaire est supérieure ou égale à 1 mm.

6. L'ensemble de plateau (1) selon l'une quelconque des revendications 1 à 5, dans lequel l'un ou l'autre du premier élément d'étanchéité (141) et du deuxième élément d'étanchéité (142) est un adhésif de construction, l' d'épaisseur de l'adhésif de construction est t, et 0,5 mm ≤ t ≤ 1 mm,
et/ou dans lequel la plaque de fond (111) est un élément en matériau isolant.

7. L'ensemble de plateau (1) selon l'une quelconque des revendications 1 à 6, dans lequel la poutre d'expansion (12) comprend une poutre de support (1201) et une plaque de séparation (1202), la poutre de support (1201) définissant une cavité de support (1201a), la plaque de séparation (1202) étant disposée dans la cavité de support (1201a) pour séparer la cavité de support (1201a) en une première cavité de support (1201b) et une deuxième cavité de support (1201c), et la première cavité de support (1201b) étant située sur un côté de la deuxième cavité de support (1201c) opposé à la partie de bord surélevée (1112).

8. L'ensemble de plateau (1) selon l'une quelconque des revendications 1 à 7, comprenant en outre l'élément de fixation (13), et la poutre d'expansion (12) comprenant en outre :
un élément de support (1203), l'élément de support (1203) étant disposé dans la deuxième cavité de support (1201c), l'élément de support (1203) supportant une paroi de la deuxième cavité de support (1201c) à distance de la plaque de séparation (1202) et de la plaque de séparation (1202), et l'élément de fixation (13) traversant la plaque de séparation (1202) et la deuxième cavité de support (1201c) et s'étendant hors de la deuxième cavité de support (1201c) pour fixer la poutre d'expansion (12) à la poutre latérale (1121).

9. L'ensemble de plateau (1) selon l'une quelconque des revendications 1 à 8, dans lequel l'élément de support (1203) comprend une pluralité de blocs de support (1203a), la pluralité de blocs de support (1203a) étant disposée à intervalles réguliers le long de la direction longitudinale de la poutre de support (1201), et chaque élément de fixation (13) traversant un bloc de support correspondant (1203a).

10. L'ensemble de plateau (1) selon l'une quelconque des revendications 1 à 9, dans lequel l'aire de la section transversale de l'élément de support (1203) est s1, l'aire de la section transversale de la deuxième cavité de support (1201c) est s2, 50 % ≤ s1/s2 ≤ 60 %, et soit la section transversale de l'élément de support (1203), soit la section transversale de la deuxième cavité de support (1201c) est perpendiculaire à la direction longitudinale de la poutre de support (1201).

11. L'ensemble de plateau (1) selon l'une quelconque des revendications 1 à 10, dans lequel une paroi de la deuxième cavité de support (1201c), éloignée de la première cavité de support (1201b), forme un trou traversant de montage (1201d), l'élément de support (1203) est disposé dans la deuxième cavité de support (1201c), une extrémité de l'élément de support (1203) vient en butée contre la plaque de séparation (1202), et l'autre extrémité de l'élément de support (1203) est ajustée dans le trou traversant de montage (1201d) et reliée de manière fixe à la paroi de la deuxième cavité de support (1201c) éloignée de la plaque de séparation (1202).

12. L'ensemble de plateau (1) selon l'une quelconque des revendications 1 à 11, dans lequel le cadre latéral (112) comprend la douille (1122), la douille (1122) étant reliée de manière fixe à la poutre d'expansion (12) et à l'élément de fixation (13) séparément, et une extrémité de la douille (1122) adjacente à la poutre d'expansion (12) venant en butée contre l'élément de support (1203).

13. Un bloc de batterie d'alimentation (100), comprenant une batterie (2), un couvercle d'étanchéité (3), et l'ensemble de plateau (1) selon l'une quelconque des revendications 1 à 12, le couvercle d'étanchéité (3) recouvrant un côté ouvert de la cavité de logement (110) et définissant, conjointement avec l'ensemble de plateau (1), un espace de montage (100a), et la batterie (2) étant prévue dans l'espace de montage (100a).

14. Bloc de batterie (100) selon la revendication 13, comprenant une pluralité de batteries d'alimentation (2), la pluralité de batteries d'alimentation (2) étant disposée en séquence dans une première direction, chacune des batteries (2) s'étendant le long d'une deuxième direction, le nombre de poutres d'expansion (12) étant de deux, les deux poutres d'expansion (12) étant respectivement disposées sur deux côtés de la pluralité de batteries (2) dans la première direction, chacune des poutres d'expansion (12) s'étendant le long de la deuxième direction, et la deuxième direction étant perpendiculaire à la première direction.

15. Véhicule (200) comprenant le bloc de batterie d'alimentation (100) selon la revendication 13 ou 14.
